# EUROPÄISCHE PATENTSCHRIFT

(11) **EP 2 293 859 B1**
(45) Veröffentlichungstag und Bekanntmachung des Hinweises auf die Patenterteilung: **06.08.2014**
(21) Anmeldenummer: 09765470.1
(22) Anmeldetag: 23.04.2009
(51) Int. Cl.: B01D 29/96

(54) **VORRICHTUNG ZUM HANDHABEN, INSBESONDERE FILTRIEREN VON FLÜSSIGKEITEN**
DEVICE FOR HANDLING, PARTICULARLY FILTERING, FLUIDS
DISPOSITIF POUR LA MANIPULATION, EN PARTICULIER LA FILTRATION DE LIQUIDES

(30) Priorität: 21.06.2008 DE 102008029533
(43) Veröffentlichungstag der Anmeldung: 16.03.2011
(73) Patentinhaber: Krones AG, 93068 Neutraubling (DE)
(72) Erfinder: HENKE, Gert, 87439 Kempten (DE); HOFMANN, Werner, 85356 Freising (DE); SOMMER, Michael, 93049 Regensburg (DE)
(74) Vertreter: Grünecker, Kinkeldey, Stockmair & Schwanhäusser
(86) Internationale Anmeldenummer: PCT/EP2009/002967
(87) Internationale Veröffentlichungsnummer: WO 2009/152890

(56) Entgegenhaltungen:
- EP-A2- 0 870 921
- US-A- 5 022 986
- US-A1- 2005 178 711
- US-B1- 6 579 455

## Beschreibung

Die Erfindung bezieht sich auf eine Vorrichtung zum Handhaben, insbesondere Filtrieren, von Flüssigkeiten.

Beim Filtrieren von Flüssigkeiten werden Filterelemente in den Flüssigkeitsstrom eingeschaltet. Insbesondere beim Herstellen und/oder Abfüllen von Getränken geschieht dies im Produktkreislauf oder -durchlauf der jeweiligen Vorrichtung. Häufig wird eine derartige Vorrichtung für die unterschiedlichsten Getränkearten eingesetzt, wobei oft die Getränke ein speziell auf diese Getränkeart ausgelegtes Filterelement erfordern. Die Filterelemente müssen somit ausgetauscht werden. Ähnlich Probleme bestehen auch beim Dosieren von Stoffen oder Stabilisieren von Flüssigkeiten, insbesondere Getränken. Auch hier kommt es vor dass an einer z.B. Abfüllmaschine je nach Produkt unterschiedliche Stabilisierungs- oder Dosierungseinrichtungen eingesetzt werden müssen.

Aus der US-A-2005/0178711 ist ein Filtersystem mit auswechselbaren Filtern bekannt, die über individuell ausgebildete, formschlüssig ineinandergreifende Vorsprünge und Ausnehmungen in einem Rahmen befestigt werden. Diese ineinandergreifenden Vorsprünge und Ausnehmungen gestatten jedoch nur eine Identifikation, ob ein geeigneter Filter eingesetzt ist oder nicht und gestattet nicht die Unterscheidung zwischen verschiedenen, jeweils für sich geeigneten Behand-lungseinrichtungen. Eine Positioniereinrichtung ist nicht vorgesehen.

Der Erfindung liegt die Aufgabe zugrunde, eine Vorrichtung zum Handhaben bzw. Behandeln von Flüssigkeiten bereitzustellen, mit der ein Behandlungselement einfach und problemlos ausgetauscht werden kann. Weiterhin ist es Aufgabe der vorliegenden Erfindung, eine Vorrichtung zum Handhaben bzw. Behandeln von Flüssigkeiten bereitzustellen, bei der der unbeabsichtigte Einsatz falscher Behandlungselemente möglichst vermieden wird.

Die Aufgabe wird durch die im Anspruch 1 angegebenen Merkmale gelöst.

Durch die erfindungsgemäße Ausgestaltung wird der Austausch des Behandlungselements stark erleichtert, weil in jedem Falle einfach sichergestellt werden kann, dass das jeweils gewünschte Behandlungselement mit dem Rahmen verbunden ist (Identifikationseinrichtung). Durch Vorsehen komplementärer Identifikationselemente und einer Feststelleinrichtung, die die Anzahl komplementärer Identifikationselementpaare feststellt und ausgehend davon das Behandlungselement eindeutig identifiziert, kann eine Verwechslung unterschiedlicher Behandlungselemente, beispielsweise durch einen Bediener, vermieden werden.

Dazu enthält die Identifikationseinrichtung eine Vielzahl von Identifikationselementen am Rahmen und eine Vielzahl von Identifikationselementen am Behandlungselement, die beim Ankoppeln des Behandlungselements am Rahmen wenigstens ein komplementäres Identifikationselementpaar bilden, das charakteristisch für das Behandlungselement ist.

Die erfindungsgemäße Vorrichtung enthält weiterhin eine Positioniereinrichtung, mit der das Behandlungselement lagegenau am Rahmen positioniert werden kann, so dass auf diese Weise der Austausch des Behandlungselementes weiter erleichtert werden kann.

Dabei enthält die Positioniereinrichtung eine Hubeinrichtung und/oder eine Verschiebeeinrichtung, die ein Ankoppeln des Behandlungselements erleichtern und unvermeidliche Abmessungstoleranzen, beispielsweise durch Abnutzungserscheinungen und Verformungen, ausgleicht.

Vorteilhafte Weiterbildungen der Erfindung sind den Unteransprüchen zu entnehmen.

Diese Bewegungen der Positioniereinrichtung werden bevorzugt durch eine um eine beabstandete Achse drehbar gelagerte Aufnahme für ein Eingriffsteil verwirklicht, da dies eine konstruktiv besonders einfache Lösung darstellt, die beide Bewegungen kombiniert und koordiniert auszuführen.

Es ist weiterhin äußerst zweckmäßig, dem Behandlungselement eine bewegliche Trageinrichtung zuzuordnen, wobei das Behandlungselement dieser Trageinrichtung bevorzugt fest zugeordnet ist, so dass Trageinrichtung und Behandlungselement als Einheit bewegbar sind. Die Trageinrichtung ist bevorzugt als Wagen zum Abrollen auf einem Untergrund ausgebildet. Es ist jedoch auch möglich, eine Trageinrichtung bzw. einen Wagen für mehrere Behandlungselemente einzusetzen.

Von besonderem Vorteil ist eine Kombination einer Identifikationseinrichtung und einer Positioniereinrichtung derart, dass die Identifikationseinrichtung als Positionierhilfe für die korrekte Anordnung und Ausrichtung des jeweils eingesetzten Behandlungselements dient.

Die Erfindung eignet sich besonders für Vorrichtungen, denen eine Mehrzahl von Behandlungselementen zugeordnet sind, wobei jedes Behandlungselement mit jeweils wenigstens einem repräsentativen Identifikationselement und einer mit dem Rahmen verbindbaren Positioniereinrichtung versehen sind.

Ein Ausführungsbeispiel der Erfindung wird nachfolgend anhand der Zeichnungen näher erläutert. Es zeigen:
- Fig. 1: eine stark schematisierte Seitenansicht einer erfindungsgemäßen Vorrichtung,
- Fig. 2: die Vorderansicht der Vorrichtung gemäß Fig. 1,
- Fig. 3: die Hubeinrichtung aus Fig. 2, isoliert dargestellt,
- Fig. 4A: eine Trageinrichtung für das Filterelement in einer ersten Position in der Hubeinrichtung,
- Fig. 4B: die Stellung der Hubeinrichtung gemäß Fig. 4A,
- Fig. 5A: das Filterelement mit Trageinrichtung in einer zweiten, angehobenen Position,
- Fig. 5B: die Hubeinrichtung in der Stellung gemäß Fig. 5A,
- Fig. 6A: Draufsicht und Seitenansicht einer Identifikationseinrichtung und Positionierhilfe am Rahmen,
- Fig. 6B: Draufsicht und Seitenansicht einer Identifikationseinrichtung und Positionierhilfe am Filterelement, und
- Fig. 6C: die Identifikationseinrichtung und Positionierhilfe in gekoppeltem Zustand.

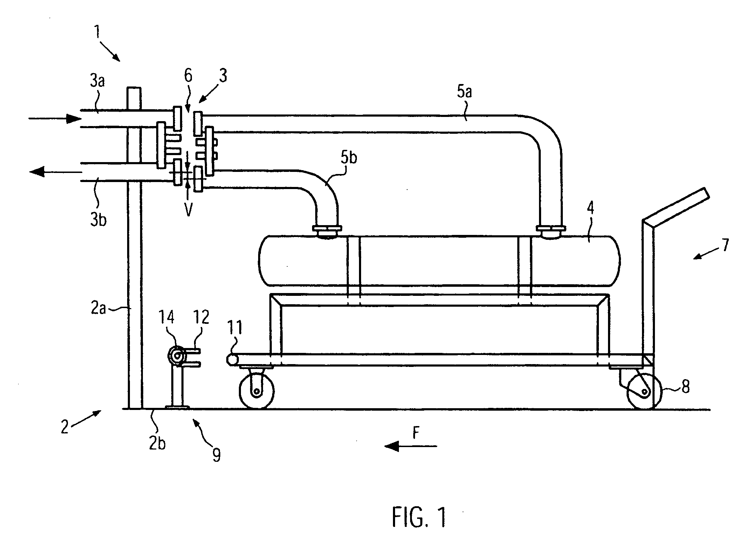

Fig. 1 zeigt in stark schematisierter Darstellung eine Vorrichtung 1 zum Handhaben von Flüssigkeiten, die im dargestellten Ausführungsbeispiel als Vorrichtung zum Filtrieren von Flüssigkeiten, insbesondere von Getränken, ausgebildet ist. Die Vorrichtung 1 kann in bestehende Produktionsanlagen, beispielsweise Anlagen für die Getränkeherstellung und -abfüllung, integriert werden. Zum Zwecke der Darstellung ist von dieser Anlage lediglich ein Teil eines Rahmens 2, z.B. in Form einer Stütze 2a und einem Untergrund, beispielsweise einem Fußboden 2b, dargestellt. Die Stütze 2a dient beispielsweise der Unterstützung einer Durchflussverbindung 3 mit einer ersten, die Anlage verlassenden Leitung 3a und einer zweiten, in die Anlage einlaufenden Leitung 3b. An die Leitungen 3a, 3b ist ein Behandlungselement 4 angeschlossen, das im dargestellten Ausführungsbeispiel als Filterelement beliebiger Konstruktion (vertikal oder horizontal) ausgebildet ist, jedoch auch eine Dosiereinrichtung, eine Stabilisierungseinrichtung oder dgl. sein kann, für die die nachfolgende Beschreibung ebenfalls Gültigkeit hat.

Das Filterelement 4 weist im dargestellten Ausführungsbeispiel eine Anschlussleitung 5a zum Anschluss an die Leitung 3a und eine Anschlussleitung 5b zum Anschluss an die Leitung 3b auf. Beide Leitungspaare 3a, 5a bzw. 3b, 5b sind über jeweils eine manuell oder selbsttätig koppelnde Verbindung 6 miteinander verbunden, wobei die Verbindung 6 beispielsweise über Clamp-Flansche erfolgen kann. Die Verbindung kann jedoch durch jede bekannte Maßnahme erfolgen.

Es ist weiterhin möglich, die der Anlage zugeordneten Leitungen 3a, 3b direkt am Filterelement, d.h. ohne die Zwischenleitungen 5a, 5b, anzukoppeln.

Das Filterelement 4 ist bevorzugt speziell auf die zu behandelnde Flüssigkeit abgestimmt und von herkömmlicher Art. Das Filterelement 4 ist austauschbar mit der Anlage zu verbinden. Zu diesem Zweck ist das Filterelement 4 auf einer beweglichen Trageinrichtung 7 befestigt (angeschweißt, angeschraubt oder dgl.). Das Filterelement 4 und die Trageinrichtung 7 können lösbar miteinander verbunden sein, so dass eine Trageinrichtung 7 für verschiedene Filterelemente 4 eingesetzt werden kann, oder können eine Einheit für einen Austausch bilden. Im dargestellten Ausführungsbeispiel ist die Trageinrichtung 7 ein Wagen, der über Rollen 8 auf dem Untergrund 2b bevorzugt manuell verfahrbar ist. Da durch die durch das manuelle Verfahren bedingte langsame Bewegung ein Heißlaufen der Rollen 8 ausgeschlossen ist und die Rollen leitfähig sein können, ist auch ein Einsatz in explosionsgefährdeter Umgebung möglich.

Wie insbesondere Fig. 1 zeigt, kann die Trageinrichtung 7 auf den Rollen 8 in Richtung F auf den Rahmen 2 zu und von ihm weg verfahren werden, um die Leitungen 5a, 5b exakt auf die Leitungen 3a, 3b der Anlage für eine Ankopplung des Filterelementes 4 auszurichten.

Wie Fig. 1 zeigt, besteht jedoch ein vertikaler Versatz V zwischen der Leitung 3a und 5a bzw. der Leitung 3b und 5b im ungekoppelten Zustand, der absichtlich vorgesehen wurde, um kleinere Höhenunterschiede, die sich beispielsweise im Laufe der Zeit durch eine Abnutzung der Rollen 8 oder aber durch gefällebedingte Höhenunterschiede des Untergrunds 2b ergeben könnten, und die ein Ankoppeln der Durchflussverbindung 6 erschweren oder unmöglich machen könnten, ausgleichen zu können. Im dargestellten Ausführungsbeispiel liegen die Leitungen 5a bzw. 5b des Filterelements 4 in vertikaler Richtung unterhalb der entsprechenden Leitungen 3a bzw. 3b. Zum Ankoppeln muss das Filterelement 4 mit seinen Leitungen 5a, 5b somit angehoben werden. Der Versatz könnte jedoch auch durch eine Höhenbewegung der Leitungen 3a, 3b ausgeglichen werden.

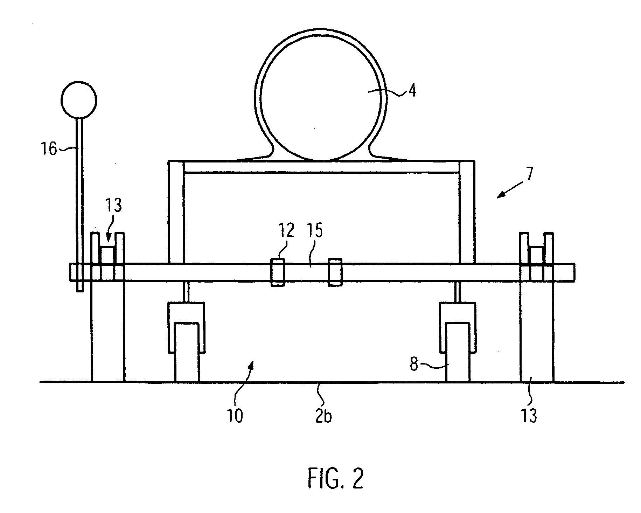

Das Anheben des Filterelements 4 geschieht durch eine Positioniereinrichtung 9, die im dargestellten Ausführungsbeispiel (Fig. 2) neben der horizontalen Verschiebemöglichkeit über die Rollen 8, eine Hubeinrichtung 10 enthält. Die Hubeinrichtung 10 enthält ein Eingriffsteil 11 und wenigstens eine Aufnahme 12. Im dargestellten Ausführungsbeispiel ist die Aufnahme 12 dem Rahmen 2 zugeordnet und ist über einen Lagerbock 13 auf dem Untergrund 2b befestigt. Das Eingriffsteil 11 ist dem Filterelement 4 zugeordnet und an der Trageinrichtung 7 befestigt.

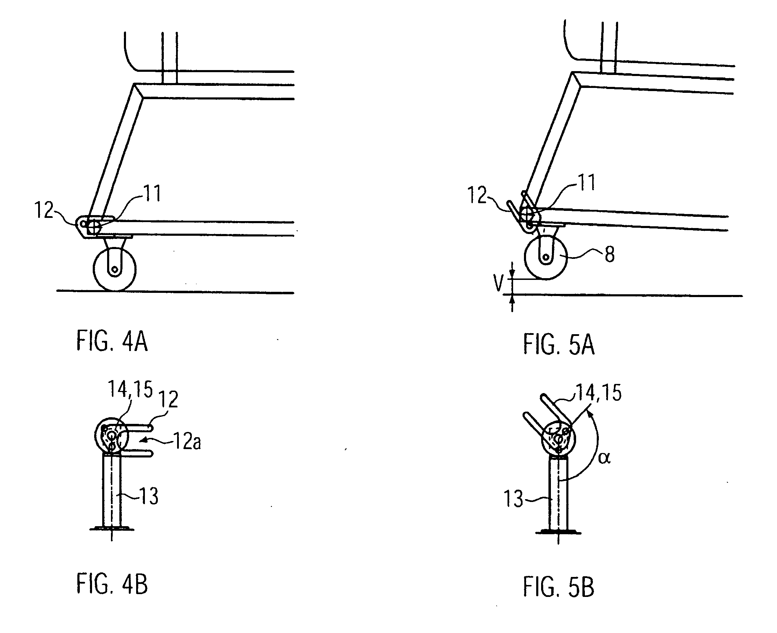

Im dargestellten Ausführungsbeispiel sind zwei Aufnahmen 12, über oder zwischen zwei Lagerböcken 13, vorgesehen und in einem Abstand quer zur Fahrrichtung F des Wagens 7 beabstandet, der geringer ist als die Breite des Wagens zwischen den Rollen 8, während die Lagerböcke 13 einen Abstand zueinander aufweisen, der größer sein kann als die Breite des Wagens. Beide Aufnahmen 12 sind identisch ausgebildet, so dass nur eine davon beschrieben wird. Wie insbesondere den Figuren 4 und 5 zu entnehmen ist, ist jede Aufnahme 12 als Gabel mit einem Aufnahmeraum 12a ausgebildet, und ist um eine Achse 14 verschwenkbar, die in einem Abstand zum Aufnahmeraum 12a liegt. Die Aufnahmen 12 sind in einer Stellung angeordnet, in der das stabförmige Eingriffsteil 11 in die Aufnahmeöffnung 12a eindringen kann, wenn die Trageinrichtung 7 mit den Rollen 8 in Kontakt mit dem Untergrund 2b an die Aufnahme 12 herangefahren wird, und zwar auch dann, wenn bereits ein gewisser Verschleiß die Höhenlage der Trageinrichtung 7 verändert hat. Auf dem Eingriffsteil 11 können Anschläge vorgesehen sein, die eine Ausrichtung quer zur Fahrtrichtung F erleichtern.

Zum gleichzeitigen Verschwenken der beiden Aufnahmen 12 (Fig.2) sind beide über eine Welle 15 fest miteinander verbunden. Die Welle 15 kann über ein Betätigungselement 16, dargestellt ist ein manuell zu betätigender Handhebel, zusammen mit den Aufnahmen 12 um die Achse 14 um den Winkel α (Fig.5) verschwenkt werden. Bevorzugt fällt die Achse 14 mit der Welle 15 zusammen.

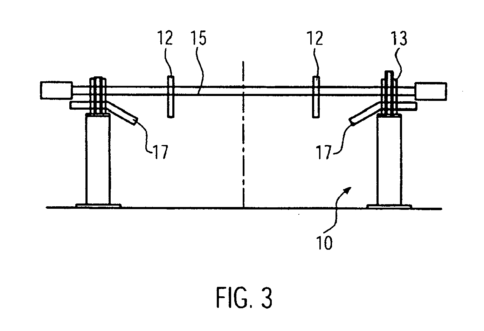

Durch den Abstand der Aufnahmeöffnung 12a (Fig.4) zur Achse 14 wird das im Aufnahmeraum 12a aufgenommene Eingriffselement 11 und somit die Trageinrichtung 7 mit dem Filterelement 4 um den Versatz V in vertikaler Richtung angehoben, bis die Leitung 3a mit der Leitung 5a und die Leitung 3b mit der Leitung 5b fluchten. Durch das Verdrehen um die Achse 14 wird das Filterelement 4 jedoch auch mit einer horizontalen Komponente bewegt, so dass anschließend die Leitungen 3a und 5a bzw. 3b und 5b zum Koppeln der Kopplungsvorrichtung 6 gegeneinander geführt und/oder gedrückt werden. Diese Stellung kann ggf. im Bereich der Hubeinrichtung 10 arretiert werden, beispielsweise durch die in Fig. 3 gezeigten Ansteckbolzen 17, die eine Drehbewegung der Aufnahme 12 sperren.

Es kann weiterhin eine nicht gezeichnete Einrichtung vorgesehen werden, die das Filterelement 4 in eine waagerechte Lage bringt. So kann eine manuelle Hubeinrichtung vorgesehen sein, beispielsweise kurbelbetätigt, die auch die dem Eingriffselement 11 gegenüberliegende Seite der Trageinrichtung und/oder des Filterelements in eine im Wesentlichen waagerechte Lage anhebt.

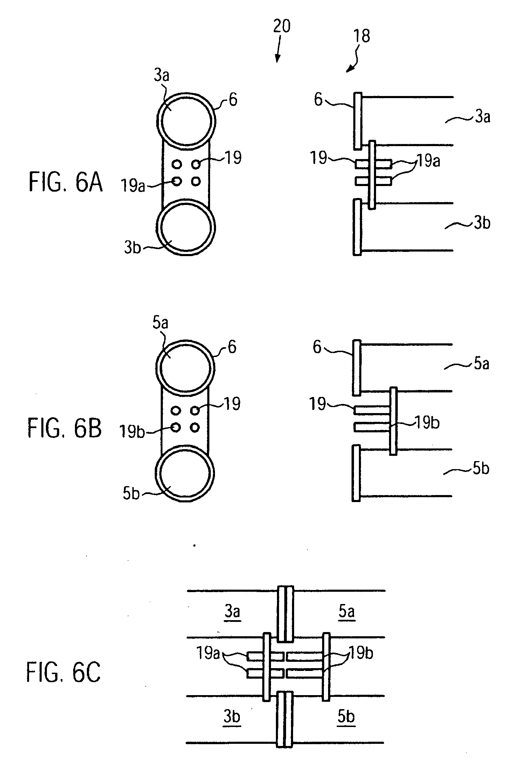

Erfindungsgemäß ist eine Identifikationseinrichtung 18 vorgesehen, die dafür sorgt, dass versehentlich falsch herangebrachte Behandlungselemente 4 eindeutig als falsch identifiziert werden und beispielsweise durch einen Alarm, eine Anzeige, eine Steuerung oder auf sonstige Weise dafür gesorgt wird, dass der Fehler korrigiert werden kann. Die Identifizierungseinrichtung 18 enthält, wie die Figuren 6A bis 6C zeigen, eine erste Anzahl Identifizierungselemente 19a, die dem Rahmen 2 zugeordnet und beispielsweise zwischen den Leitungen 3a, 3b angeordnet sind, und eine zweite Anzahl Identifizierungselemente 19b, die dem Behandlungselement 4 zugeordnet sind und beispielsweise zwischen den Leitungen 5a, 5b angeordnet sind. Es ist weiterhin eine Feststelleinrichtung (nicht gezeigt) vorgesehen, beispielsweise in Form von Näherungssensoren oder andere Erkennungseinrichtungen mit entsprechender Auswertung, mit der festgestellt werden kann, ob sich die Identifizierungselemente 19a, 19b in der korrekten und vorbestimmten Position zueinander befinden. Im dargestellten Ausführungsbeispiel sind die Identifizierungselemente 19a, 19b Stifte, deren fluchtende Ausrichtung zueinander festgestellt wird. Zum Identifizieren und Individualisieren bestimmter Behandlungselemente 4 wird durch eine beim Koppeln erzeugte Paarung von Identifizierungselementen 19a mit 19b ein charakteristisches Muster erzeugt, wobei die Identifizierungselemente 19b, die dem Behandlungselement 4 zugeordnet sind, individualisiert sind, beispielsweise indem nur eine vorbestimmte Anzahl von mit Näherungssensoren versehenen Identifizierungselementen 19b vorgesehen sind und/oder diese an bestimmten Stellen angeordnet werden, die nur diesem bestimmten Behandlungselement 4 vorbehalten sind. Die Identifikationseinrichtung im Bereich des Rahmens 2 stellt dann fest, wie viele Identifizierungselemente 19b im Bereich des Behandlungselements 4 identifizierbar vorgesehen sind und an welcher Stelle sich diese befinden und vergleicht diese Feststellung mit einer vorgegebenen Kodierung, so dass problemlos festgestellt werden kann, ob das richtige Behandlungselement 4 angekoppelt wurde. Im dargestellten Ausführungsbeispiel sind beispielsweise im Bereich des Rahmens und im Bereich des Behandlungselements vier Identifizierungselemente 19a, 19b vorhanden, wobei beispielsweise bei einem ersten Behandlungselement 4 alle vier Identifizierungselemente 19b feststellbar sind, bei einem weiteren Behandlungselement 4 nur drei Identifizierungselemente 19b feststellbar sind, wobei die nicht feststellbare Lücke sich rechts oben befindet, usw., so dass bereits im dargestellten Ausführungsbeispiel fünfzehn verschiedene Behandlungselemente 4 identifiziert und individualisiert werden können.

Im dargestellten Ausführungsbeispiel sind die Identifizierungselemente 19a, 19b als Stifte und Initiatoren ausgebildet. Andere Ausbildungen bzw. andere Arten von Erkennungseinrichtungen sind möglich.

Im dargestellten Ausführungsbeispiel dient die Identifikationseinrichtung 18 gleichzeitig als Positionierhilfe 20; d.h. eine korrekte Positionierung wird angezeigt, sobald die Identifikationseinrichtung 18 korrekt arbeitet, d.h. die fluchtende Ausrichtung der Identifikationselemente 19a zu 19b zueinander, anzeigt.

Die Erfindung ist insbesondere dort vorteilhaft einzusetzen, wo die Anlage mit verschiedenen Flüssigkeiten betrieben wird, die unterschiedlich ausgebildete Behandlungselemente erfordern, so dass beim Wechsel von einer Flüssigkeit auf eine weitere Flüssigkeit das Behandlungselement ausgetauscht werden muss, und sichergestellt werden muss, dass jeweils das erforderliche Behandlungselement eingebaut wird.

In Abwandlung des beschriebenen und gezeichneten Ausführungsbeispiels kann die Trageinrichtung auch als Schlitten oder Hebezeug ausgebildet sein. Das Behandlungselement kann auch ohne speziell angepasste Trageinrichtung (Wagen) bewegt werden. Als Hubeinrichtung sind alle geeigneten technischen Möglichkeiten, einschließlich strömungsmittelbetätigte, einsetzbar. Statt das Behandlungselement anzuheben, können auch die dem Rahmen zugeordneten Leitungen abgesenkt oder angehoben werden. Die Positionierhilfe und die Identifikationseinrichtung können getrennt ausgebildet sein und müssen nicht unbedingt über stiftförmige Identifizierungselemente mit Näherungssensoren verwirklicht werden. Auch kann die Anzahl der Identifikationselemente an Rahmen und Behandlungselement unterschiedlich sein, und beispielsweise eine Identifizierung nur über die Position nur eines Identifizierungselementes erfolgen.

## Patentansprüche

1. Vorrichtung (1) zum Handhaben, insbesondere Filtrieren von Flüssigkeiten, insbesondere von Getränken, mit einem Rahmen (2), wenigstens einem Behandlungselement (4), das auswechselbar am Rahmen (2) befestigt und mit einer lösbaren Durchflussverbindung (3) ausgebildet ist, mit einer Identifikationseinrichtung (18) zum Identifizieren des Behandlungselementes (4) und mit einer Positioniereinrichtung (9) zum lagegenauen Positionieren des Behandlungselements (4) am Rahmen (2), die eine Hubeinrichtung (10) in einer im Wesentlichen vertikalen Richtung und/oder eine Verschiebeeinrichtung in einer im Wesentlichen horizontalen Richtung enthält; wobei die Positioniereinrichtung (9) eine bewegliche Trageinrichtung (7), ausgebildet als ein Wagen, für das Behandlungselement (4) enthält und
wobei das Behandlungselement (4) der Trageinrichtung (7) fest zugeordnet ist, wobei die Identifikationseinrichtung (18) eine erste Anzahl von Identifikationselementen (19a) am Rahmen (2) und eine zweite Anzahl von Identifikationselementen (19b) am Behandlungselement (4) aufweist, die beim Ankoppeln des Behandlungselements (4) am Rahmen (2) wenigstens ein komplementäres Identifikationselementpaar bilden, das charakteristisch für das Behandlungselement (4) ist, und dass eine Feststelleinrichtung zum Feststellen der Identifikationselementpaare vorgesehen ist, wobei das Behandlungselement (4) durch die Anzahl komplementärer Identifikationselementpaare, die durch die Feststelleinrichtung festgestellt werden können, eindeutig identifiziert werden kann.

2. Vorrichtung nach Anspruch 1, **dadurch gekennzeichnet, dass** die Positioniereinrichtung (9) eine um eine beabstandete Achse (14) drehbar gelagerte Aufnahme (12) für ein Eingriffsteil (11) enthält.

3. Vorrichtung nach Anspruch 2, **dadurch gekennzeichnet, dass** die Aufnahme (12) eine Gabel und das Eingriffselement (11) eine Stange enthält.

4. Vorrichtung nach Anspruch 2 oder 3, **dadurch gekennzeichnet, dass** die Aufnahme (12) dem Rahmen (2) und das Eingriffsteil (11) dem Behandlungselement (4) zugeordnet ist.

5. Vorrichtung nach einem der Ansprüche 1 bis 4, **dadurch gekennzeichnet, dass** die Identifikationseinrichtung (18) und die Positioniereinrichtung (9) kombiniert sind, wobei eine fluchtende Ausrichtung von Identifikationselementen (19a, 19b) am Rahmen (2) und am Behandlungselement (4) als Positionierhilfe (20) dient.

6. Vorrichtung nach einem der Ansprüche 1 bis 5, **dadurch gekennzeichnet, dass** der Vorrichtung eine Mehrzahl Behandlungselemente (4) zugeordnet sind, die jeweils mit jeweils wenigstens einem repräsentativen Identifikationselement (19b) und einer mit dem Rahmen (2) verbindbaren Positioniereinrichtung (9) versehen sind.

## Claims

1. Device (1) for handling, in particular filtering, fluids, in particular beverages, having a frame (2) and at least one treatment element (4) interchangeably mounted on the frame (2) and embodied with a releasable flow-through connection (3), and having an identification device (18) for identifying the treatment element (4) and a positioning device (9) for accurately positioning the treatment element (4) is provided at the frame (2), including a lifting device (10) in an essentially vertical direction and/or a shifting device in an essentially horizontal direction;
wherein the positioning device (9) includes a movable carrying device (7), in particular a carriage, for the treatment element (4) and wherein the treatment element (4) is dedicated to the carrying device (7), wherein the identification device (18) comprises a first number of identification elements (19a) at the frame (2), and a second number of identification elements (19b) at the treatment element (4) which, during the coupling of the treatment element (4) on the frame (2), form at least one complementary pair of identification elements characteristic of the treatment element (4), and that a determining device for determining the pair of identification elements is provided, wherein the treatment element (4) can unambiguously be identified by the number of complementary pairs of identification elements that can be determined by the determining device.

2. Device according to claim 1, **characterized in that** the positioning device (9) includes a seat (12) for an engagement part (11) mounted to rotate about a spaced axle (14).

3. Device according to claim 2, **characterized in that** the seat (12) includes a fork, and the engagement element (11) includes a rod.

4. Device according to claim 2 or 3, **characterized in that** the seat (12) is associated to the frame (2), and the engagement part (11) is associated to the treatment element (4).

5. Device according to one of claims 1 to 4, **characterized in that** the identification device (18) and the positioning device (9) are combined, an aligned orientation of identification elements (19a, 19b) at the frame (2) and at the treatment element (4) functioning as positioning aid (20).

6. Device according to one of claims 1 to 5, **characterized in that** a plurality of treatment elements (4) is associated to the device which are each provided with at least one representative identification element (19b) and a positioning device (9) connectable to the frame (2).

## Revendications

1. Installation (1) pour la manipulation, notamment pour assurer la filtration de liquides, en particulier de boissons, comprenant un bâti (2), au moins un élément de traitement (4), qui est fixé de manière interchangeable au bâti (2) et comporte une liaison d'écoulement (3), amovible, l'installation comprenant également un dispositif d'identification (18) pour identifier l'élément de traitement (4), et un dispositif de positionnement (9) pour le positionnement spatial précis de l'élément de traitement (4) sur le bâti (2) et qui comporte un dispositif de levage (10) dans une direction sensiblement verticale et/ou un dispositif de translation ou coulissement dans une direction sensiblement horizontale, installation
dans laquelle le dispositif de positionnement (9) comprend un dispositif porteur mobile (7), réalisé sous forme de chariot, pour l'élément de traitement (4), et dans laquelle l'élément de traitement (4) est associé de manière fixe au dispositif porteur (7),
dans laquelle le dispositif d'identification (18) présente un premier nombre d'éléments d'identification (19a) sur le bâti (2) et un deuxième nombre d'éléments d'identification (19b) sur l'élément de traitement (4), qui forment, lors du couplage de l'élément de traitement (4) au bâti (2), au moins une paire complémentaire d'éléments d'identification, qui est caractéristique pour l'élément de traitement (4), et
dans laquelle il est prévu un dispositif d'immobilisation pour immobiliser les paires d'élément d'identification,
l'élément de traitement (4) pouvant être identifié sans équivoque grâce au nombre de paires complémentaires d'éléments d'identification, qui peuvent être immobilisés par le dispositif d'immobilisation.

2. Installation selon la revendication 1, **caractérisée en ce que** le dispositif de positionnement (9) comprend un logement d'accueil (12), qui est monté rotatif autour d'un axe (14) situé à distance, et est destiné à une pièce d'engrènement (11).

3. Installation selon la revendication 2, **caractérisée en ce que** le logement d'accueil (12) comprend une fourche, et l'élément d'engrènement (11) comprend une barre.

4. Installation selon la revendication 2 ou la revendication 3, **caractérisée en ce que** le logement d'accueil (12) est associé au bâti (2) et la pièce d'engrènement (11) à l'élément de traitement (4).

5. Installation selon l'une des revendications 1 à 4, **caractérisée en ce que** le dispositif d'identification (18) et le dispositif de positionnement (9) sont combinés, une orientation alignée d'éléments d'identification (19a, 19b) sur le bâti (2) et sur l'élément de traitement (4) servant d'aide au positionnement (20).

6. Installation selon l'une des revendications 1 à 5, **caractérisée en ce qu'**à l'installation sont associés une pluralité d'éléments de traitement (4), qui sont pourvus chacun respectivement d'au moins un élément d'identification (19b) représentatif et d'un dispositif de positionnement (9) pouvant être relié au bâti (2).
